# EUROPEAN PATENT SPECIFICATION

(11) **EP 3 060 978 B1**
(45) Date of publication and mention of the grant of the patent: **11.08.2021**
(21) Application number: 14855236.7
(22) Date of filing: 24.10.2014
(51) Int. Cl.: G06F 9/06, G06F 9/30

(54) **PROCESSOR AND METHODS FOR FLOATING POINT REGISTER ALIASING**
PROZESSOR UND VERFAHREN FÜR GLEITKOMMAREGISTER-ALIASING
PROCESSEUR ET PROCÉDÉS DE DÉNOMINATION DE REGISTRES À VIRGULE FLOTTANTE

(30) Priority: 27.10.2013 US 201361896091 P
(43) Date of publication of application: 31.08.2016
(73) Proprietor: Advanced Micro Devices, Inc., Santa Clara, CA 95054 (US)
(72) Inventor: WEIDNER, Robert E., Fort Collins, Colorado 80525 (US); FLEISCHMAN, Jay E., Fort Collins, Colorado 80526 (US); SEDMAK, Michael C., Fort Collins, Colorado 80528 (US); ESTLICK, Michael, Fort Collins, Colorado 80528 (US); MCGOWEN, Richard, Waccabuc, New York 10597 (US); TALPES, Emil, San Mateo, California 94403 (US)
(74) Representative: Robinson, David Edward Ashdown
(86) International application number: PCT/US2014/062195
(87) International publication number: WO 2015/061697

(56) References cited:
- EP-A2- 1 217 513
- US-A- 6 122 656
- US-A1- 2004 268 092
- US-A1- 2005 102 494
- US-A1- 2011 208 918
- US-A1- 2012 059 998

## Description

### CROSS REFERENCE TO RELATED APPLICATIONS

This application claims the benefit of U.S. Provisional Patent Application No. 61/896,091 filed October 27, 2013.

### FIELD OF INVENTION

The invention relates generally to electronic circuits, and more particularly, to microprocessors and methods of microprocessing.

### BACKGROUND

Many computer systems include hardware designed to carry out operations on floating point numbers. Such hardware may be referred to as a floating point unit, and may be integrated with a central processing unit. A floating point unit (FPU) may be used for executing floating point instructions, and floating point instructions may reference a set of floating point architectural registers.

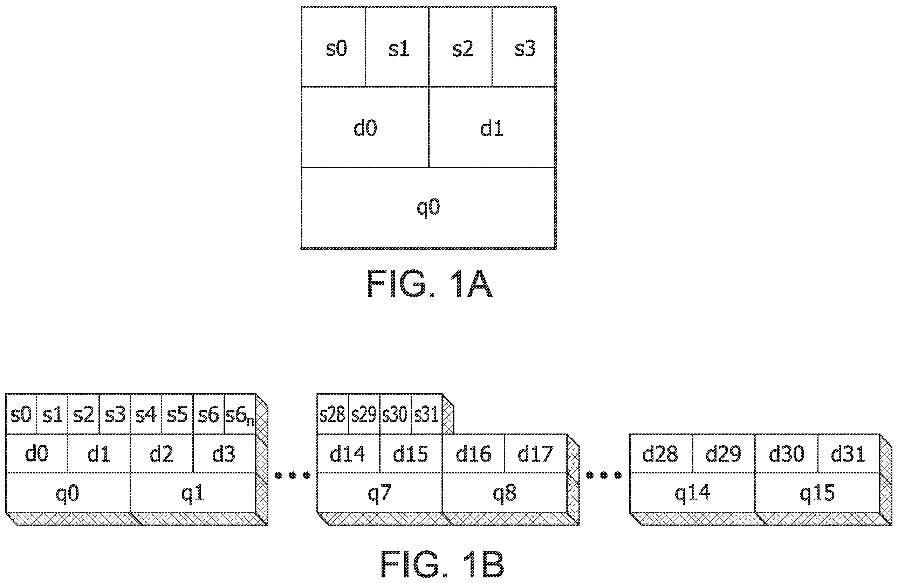

Some instruction set architectures (ISAs), such as ARM v7, may organize floating point architectural registers so that they are densely packed. For example, the architectural registers may be organized in such a way that a single bit space can be referenced as a single quad precision (Q) register, two double precision (D) registers, or four single precision (S) registers. FIG. 1A illustrates an example bit space that is organized in this way. The bit space of FIG. 1A may be a 128 bit space, for example, which includes a single 128 bit Q register, two 64 bit D registers, and four 32 bit S registers.

FIG. 1B illustrates an example set of 16 such bit spaces, which include a total of 16 Q registers (Q0 - Q15), 32 D registers (D0 - D31) and 32 S registers (S0 - S31). It is noted that in the example of FIG. 1B only the first 8 Q registers (Q0 - Q7) are packed with S registers, (for a total of 80 architectural registers), however conceptually all Q registers may be packed with S registers. The group of architectural registers packed within a given full width register (including the full width register) may be referred to as a "quad" or by the name of the largest register.

In some applications it may be desirable to use register renaming for floating point instructions to map the architectural register operands of such instructions to physical registers. A register renamer may be implemented for this purpose. Register renaming may be used to deserialize execution of the floating point instructions. By mapping the same architectural register referenced by two instructions (where there is a false dependency) to different physical registers (i.e. by "renaming" the architectural registers referenced by the instructions), execution of instructions that would otherwise encounter a hazard by referencing the same architectural register may be executed simultaneously or out of order, for example. EP 12 17 513 discloses a method of accessing packed registers stored in physical memory.

### SUMMARY OF EMBODIMENTS

Some embodiments provide a method for accessing packed registers. A state of the packed registers is stored. It is determined whether the register is directly accessible based on the state, on a condition that an instruction accesses a register of the packed registers. An action is performed which allows the register to be accessed directly on a condition that the register is not directly accessible.

Some embodiments provide a device configured to access packed registers. Circuitry stores a state of the packed registers. Circuitry determines based on the state whether the register is directly accessible, on a condition that an instruction accesses a register of the packed registers. Circuitry performs an action which allows the register to be accessed directly on a condition that the register is not directly accessible.

### BRIEF DESCRIPTION OF THE DRAWINGS

A more detailed understanding may be had from the following description, given by way of example in conjunction with the accompanying drawings wherein:
FIG. 1A is a block diagram of an example densely packed architectural register.
FIG. 1B is a block diagram representing a plurality of densely packed architectural registers.
FIG. 2 is a block diagram of an example device in which one or more disclosed embodiments may be implemented.
FIG. 3 is a block diagram illustrating example circuitry for decoding instructions and handling aliasing effects.
FIG. 4 is a flow chart illustrating an example method for decoding instructions and handling aliasing effects.

### DETAILED DESCRIPTION

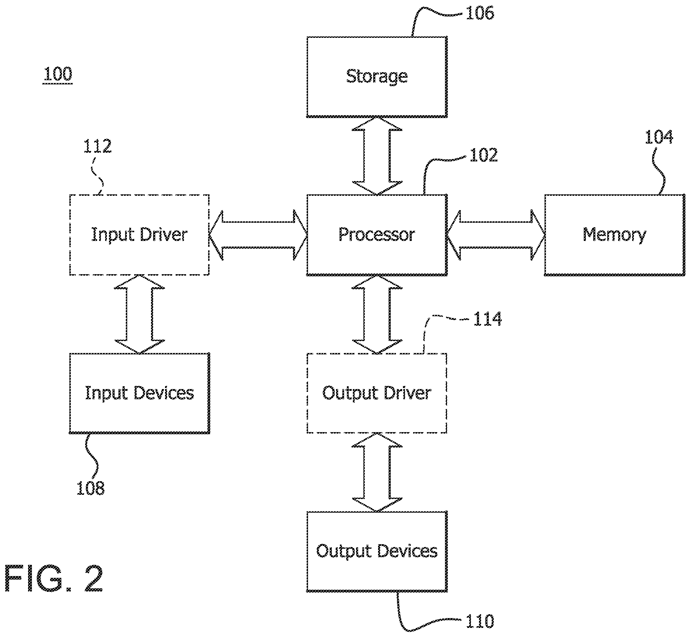

FIG. 2 is a block diagram of an example device 100 in which one or more disclosed embodiments may be implemented. The device 100 may include, for example, a computer, a gaming device, a handheld device, a set-top box, a television, a mobile phone, or a tablet computer. The device 100 includes a processor 102, a memory 104, a storage device 106, one or more input devices 108, and one or more output devices 110. The device 100 may also optionally include an input driver 112 and an output driver 114. It is understood that the device 100 may include additional components not shown in Figure 1.

The processor 102 may include a central processing unit (CPU), a graphics processing unit (GPU), a CPU and GPU located on the same die, or one or more processor cores, wherein each processor core may be a CPU or a GPU. The memory 104 may be located on the same die as the processor 102, or may be located separately from the processor 102. The memory 104 may include a volatile or non-volatile memory, for example, random access memory (RAM), dynamic RAM, or a cache. It is noted that memory 104 may be implemented as one or more discrete units and that device 100 may include multiple distinct memories (not shown). For example, device 100 may include both CPU and GPU memories (not shown) as further discussed herein.

The storage device 106 may include a fixed or removable storage, for example, a hard disk drive, a solid state drive, an optical disk, or a flash drive. The input devices 108 may include a keyboard, a keypad, a touch screen, a touch pad, a detector, a microphone, an accelerometer, a gyroscope, a biometric scanner, or a network connection (e.g., a wireless local area network card for transmission and/or reception of wireless IEEE 802 signals). The output devices 110 may include a display, a speaker, a printer, a haptic feedback device, one or more lights, an antenna, or a network connection (e.g., a wireless local area network card for transmission and/or reception of wireless IEEE 802 signals).

The input driver 112 communicates with the processor 102 and the input devices 108, and permits the processor 102 to receive input from the input devices 108. The output driver 114 communicates with the processor 102 and the output devices 110, and permits the processor 102 to send output to the output devices 110. It is noted that the input driver 112 and the output driver 114 are optional components, and that the device 100 will operate in the same manner if the input driver 112 and the output driver 114 are not present.

For the sake of brevity, conventional techniques related to integrated circuit design, caching, memory operations, memory controllers, and other functional aspects of the systems (and the individual operating components of the systems) have not been described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used in the following description for the purpose of reference only, and thus are not intended to be limiting, and the terms "first", "second" and other such numerical terms referring to structures do not imply a sequence or order unless clearly indicated by the context.

The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the figures may depict one exemplary arrangement of elements, additional intervening elements, devices, features, or components may be present in an embodiment of the depicted subject matter.

While at least one exemplary embodiment has been presented in the following description, it should be appreciated that a vast number of variations exist. It will also be appreciated that the exemplary embodiment or embodiments described herein are not intended to limit the scope, applicability, or configuration of the claimed subject matter in any way. Rather, the foregoing detailed description will provide those skilled in the art with a guide for implementing the described embodiment or embodiments. It will be understood that various changes may be made in the function and arrangement of elements without departing from the scope defined by the claims.

Storing densely packed architectural registers such as those illustrated with respect to FIGS. 1A and 1B in physical registers may cause problematic aliasing effects in some processor architectures. For example, when densely packed architectural registers of different sizes are mapped to physical registers all having the same size, aliasing effects may result in invalid data being written or read unless additional measures are taken to correct the mapping, as discussed further herein. Furthermore, the micro-operation (uop) stream of the processor architecture may require that all of the architectural registers be independently readable and writable. For example, it may be necessary for a read of Q0 which follows a write to S3 to return a value that includes results of the write to S3. The processor architecture may also require that the least significant bit (LSB) of any operation be aligned with the LSB of the data path. Thus, to read S3 (aligned with bit 96 of Q0 in the example of FIGS. 1A and 1B), it may first be necessary to align the S3 data stored in a physical register to bit 0 if it is not already so aligned.

To address such issues, a register state may be stored for all registers packed within the full width architectural register (i.e., the quad) which reflects whether the quad has been stored as a fully packed register (i.e., within a single physical register and in order) or whether it has been broken up into two registers (D or 64 bit registers in the example of FIGS. 1A and 1B), four registers (S or 32 bit registers in the example of FIGS. 1A and 1B) or three registers (e.g., one D and 2 S registers) which are stored separately in different physical registers (or out of order in the same physical register, or both).

When an instruction attempts to access a full width architectural register or one of the architectural registers packed within it, the state may be checked to determine whether the desired register can be accessed directly from a single physical register, whether the data must first be reassembled from different physical registers, or whether the data within the physical registers must be reorganized, for example by writing a part of the data stored within a physical register to a new physical register in a different bit position. For example, if an instruction attempts to read a full width architectural register or one of the architectural registers packed within it, the state may be checked to determine whether the desired register can be read directly from a single physical register, whether the data must first be reassembled from different physical registers, or whether the data within the physical registers must be reorganized, for example by writing a part of the data stored within a physical register to a new physical register in a different bit position. The state may also be checked for other types of accesses, for example writes, etc.

In a processor architecture where it is desired to independently read and write densely packed registers, writing a smaller register after a larger corresponding packed register is written may only invalidate part of the data stored for the larger packed register. It may thus be necessary to preserve the rest of the data. For example, if Q0 is written and subsequently S0 is written (mapped to a new physical register name (PRN) corresponding to a new physical register), the data for S1, S2, and S3 within the physical register storing Q0 is still valid and must be preserved, i.e., not discarded by overwriting the entire physical register storing Q0. By storing a state of the quad register Q0 which reflects how the packed registers are stored physically, it remains possible to access each of the packed registers. In this example, some of the packed registers may be directly accessed from the physical registers and some may require the bits stored within the physical registers be reorganized, possibly by moving them into a new physical register as further discussed herein.

To facilitate renaming, a logical register name (LRN) may be assigned to each architectural register. A mapping may then be stored between the LRN and the PRN of the physical register within which it is written. A table containing mappings between the LRNs and the PRNs may be referred to as a register map.

A new physical register may be allocated for an architectural register each time it is written (to facilitate renaming, for example.) That physical register may later be "retired" and returned to a "free list" (i.e., may be made unavailable for reading and can be used for mapping to a new architectural register) when the data is no longer valid.

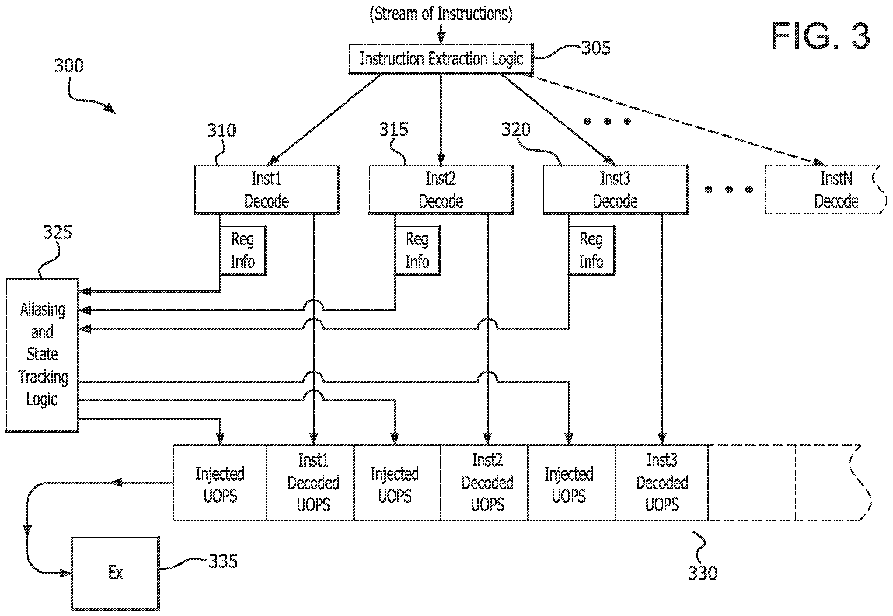

Table 1 describes example problems which may arise if a given architectural register of a given size is read or written by an instruction after a different architectural register aliased or "packed" with the quad has previously been written. Table 1 is described with respect to the architectural registers packed with Q0 of FIGS. 2 and 3. The table describes problems which may arise if an architectural Q or D or S register packed within a quad is read or written after the same or a different Q or D or S register packed within that quad has been written.

**Table 1**

| Last written | Current action | Issue? |
|---|---|---|
| As Quad | Read or Write as a quad | No issue. |
| | Read lower double | No issue. The LRN-PRN mapping for D0 is valid and the data is aligned. |
| | Read upper double | The upper double cannot be simply read from this state. The LRN-PRN mapping for D1 will have been made invalid by the write to the full quad, and the data stored in the PRN for the full quad is not aligned for the data-path. |
| | Write lower double | Before writing the lower double, the data for the upper double must first be preserved in a new PRN. |
| | Write upper double | The upper double can be written by making the LRN-PRN mapping for D1 valid, however it must be noted that the mapping for the full quad is now only valid for the lower double. |
| | Read lowest single | No issue. The LRN-PRN mapping for S0 is valid, and the data is aligned. |
| | Read upper singles | Invalid. The mapping for these registers will have been made invalid by the write to the quad LRN, and the data in the quad's PRN is not aligned to the data path. Manipulation of the bits within the physical registers will be required to read the upper singles. |
| | Write lowest singles | Before writing the lowest singles, the data for the other singles must first be preserved. |
| | Write uppermost single | S3 may be written by making the LRN-PRN mapping for S3 valid, but it must be noted that the PRN for the full quad now only contains valid data for the lower three singles. |
| As Double | Read as a quad | Must first repack the data for the full quad into a new PRN and make the mapping for the quad valid. |
| | Read or write as double | No issue. |
| | Read lower single | No issue. The mapping for the lower single is the same as the double, and the data is aligned. |
| | Read upper single | First need to unpack the data for the upper single from the quad and align it to the data path, and then note the mapping for the upper single as valid. |
| | Write as a quad | Will replace the data for all previous writes. Must return the PRNs for all the current mappings to the free list. |
| | Write lower single | Must first preserve the data for the upper single and ensure that can access it through the register map. |
| | Write upper single | The mapping for the upper single can be made valid with a new PRN, but it must be noted that the mapping for the double is now only valid for the lower single, not the full double. |
| As Single | Read as quad or double | The quad/double must first be repacked from all its constituent parts and it must be noted that the mapping of the quad/double is valid to be read as a quad or double. |
| | Read or write as a single | No issue. |
| | Write as a quad or double | Depending upon the architecture, only one PRN may be returned to the free list per uop retired. Accordingly, it may be necessary first to reclaim the PRNs for the other portions of the quad or double. |

As discussed above, to address such issues, a register state of each quad may be stored. To track the state, each quad may correspond to multiple LRNs, which are each independently mappable to the physical registers. Each of the independently mappable LRNs may represent one or more of the packed architectural registers. In the example of FIGs. 1A and 1B, each architectural register may have four LRNs.

The first LRN may represent either a full Q register, the lower D register (which is aligned with the Q register), or the lowest S register (which is aligned with the Q register and the lower D register). In the example of FIG. 1A, these registers correspond to Q0, D0, and S0, and the first LRN may be referred to as Q0/D0/S0. The second LRN may represent only the second S register. In the example of FIG. 1A, this corresponds to S1, and the second LRN may be referred to as S1. The third LRN may represent both the upper D register and the third S register. In the example of FIG. 1A, these correspond to D1 and S2, which are aligned, and the third LRN may be referred to as D1/S2. The fourth LRN may represent only the fourth S register. In the example of FIG. 1A, this corresponds to S3, and the fourth LRN may be referred to as S3.

An example set of LRNs for example architectural registers Q0 - Q3 of FIG. 1B (and their corresponding packed D and S registers) is shown below in Table 2:

**Table 2**

| Q0 | Q1 | Q2 | Q3 | .. |
|---|---|---|---|---|
| Q0/D0/S0 | Q1/D2/S4 | Q2/D4/S8 | Q3/D6/S12 | .. |
| S1 | S5 | S9 | S13 | .. |
| D1/S2 | D3/S6 | D5/S10 | D7/S14 | .. |
| S3 | S7 | S11 | S15 | .. |

Each LRN may be mapped to a PRN independently. An example register map illustrating a possible mapping of the LRNs to PRNs is shown below in Table 3:

**Table 3**

| Q0 | Q1 | Q2 | Q3 | .. |
|---|---|---|---|---|
| Q0/D0/S0:PRNA | Q1/D2/S4:PRNB | Q2/D4/S8:PRNC | Q3/D6/S12:PRND | .. |
| S1:PRNA | S5:PRNB | S9:PRNC | S13:PRND | .. |
| D1/S2:PRNA | D3/S6:PRNB | D5/S10:PRNC | D7/S14:PRND | .. |
| S3:PRNA | S7:PRNB | S11:PRNC | S15:PRND | .. |

A state of the LRN-PRN mapping must be tracked to handle the aliasing issues discussed above, because it may not otherwise be certain that data read by accessing a given LRN will be valid. The state for each LRN-PRN mapping may be tracked per-quad (i.e., the state may pertain to all of the LRNs that are aliased or packed together.) The quad may be referred to by the name of the Q register within which the other registers are packed. For example, a state for Q0 may track the state of the LRN-PRN mapping between LRNs Q0/D0/S0, S1, D1/S2, and S3 and the PRNs. Thus, if Q0 is in a state D0/D1 for example (discussed further herein), the state may denote that any read from or write to architectural registers Q0, D0, D1, S0, S1, S2, or S3 will need to take account of this state during decoding, because the state pertains to all of the LRNs for these architectural registers. Table 4 illustrates eight example register states for LRN-PRN mapping.

**Table 4**

| State Name | Explanation | |
|---|---|---|
| Quad | LRN Q00/D00/S00: | Valid for reads up to a quad |
| | LRN S01: | Invalid in this state |
| | LRN D01/S02: | Invalid in this state |
| | LRN S03: | Invalid in this state |
| D0/D1 | LRN Q00/D00/S00: | Valid for reads up to a double, invalid as a quad |
| | LRN S01: | Invalid in this state |
| | LRN D01/S02: | Valid for reads as a double or single |
| | LRN S03: | Invalid in this state |
| S0/S1/D1 | LRN Q00/D00/S00: single | Valid only for reads as a |
| | LRN S01: | Valid |
| | LRN D01/S02: | Valid for reads as a double or single |
| | LRN S03: | Invalid in this state |
| D0/S2/S3 | LRN Q00/D00/S00: | Valid for reads up to a double, invalid as a quad |
| | LRN S01: | Invalid in this state |
| | LRN D01/S02: | Valid only as a single |
| | LRN S03: | Valid |
| S0/S1/S2/S3 | LRN Q00/D00/S00: | Valid only as a single |
| | LRN S01: | Valid |
| | LRN D01/S02: | Valid only as a single |
| | LRN S03: | Valid |
| Q/D1 | This state may be used as an optimization. If in state Quad and need to read D1, can shuffle the upper 64 bits of the quad to a new PRN and make the LRN for D01/S02 valid for reading as a single or double, but also leave the original LRN Q00/D00/S00 still be valid to be read as a quad. | |
| D0/D1U | This state may be used as an optimization. If in state Quad and want to write the lower double, this state would allow the LRN Q00/D00/S00 mapping to be marked as valid to be read as up to a double with the new PRN from that write. If can point the LRN for D1/S02 to the original PRN for the full quad, and not return that PRN to the free list when the write retires, then it is known that the data for D1 is in the PRN, but not aligned for the data path. That allows any action on realigning D1 to be deferred until it needs to be read, and no additional action needs to be taken if D1 is written next. The best way to copy the PRN is to have the original write of the quad write the PRN for this LRN as well. | |

To keep track of the state of the mappings, bits may be stored for each quad. These bits may be tracked and/or stored by a decoder unit (DE) or any other suitable unit of the processor. For example, three bits may be stored and tracked by a unit within a DE for each quad to track eight states. In an example using eight states, the state may be tracked using the example bit encoding described in Table 5.

**Table 5**

| State Name | Encoding |
|---|---|
| Quad | 001 |
| D0/D1 | 010 |
| S0/S1/D1 | 011 |
| D0/S2/S3 | 100 |
| S0/S1/S2/S3 | 101 |
| Q/D1 | 110 |
| D0/D1U | 111 |

It is noted that the states described in Tables 4 and 5 are exemplary. For example, the Quad, D0/D1, and S0/S1/S2/S3 states may be essential for dealing with aliasing issues. However, the other states, i.e., Q/D1, D0/D1U, DO/S2/S3, and S0/S1/D1 may be used for performance optimization purposes (e.g., fewer manipulations of the data in the physical registers may be required if these additional states are tracked). It is noted and will be understood that the scheme could be further extended for any number of optimizations, for example, by increasing the number of states or by using different states. Such additional or different states may include Q0/D1/S3, Q0/S3, Q0/S1, D0/S1/D1, D0/S1/S2/S3, D0/S1/S2/S3, D0/S1/D1/S3, S0/S1U/D1, D0/S2/S3U, S0/S1U/S2/S3, S0/S1/S2/S3U, S0/S1U/S2/S3U, and so forth, as are derivable from the principles discussed herein.

If it is determined that data stored the physical registers must be manipulated to maintain the validity of the data when executing an instruction (based on the LRN-PRN mapping state and the type and size of access to the aliasing registers), the data within the physical registers may be manipulated (e.g., moved from part of a physical register to part of a different physical register) by injecting additional "fixup" micro operations (uops) into the uop stream or buffer ahead of the decoded uops for the instruction. The fixup uops may be determined and/or injected by the DE or any other suitable structure of the processor. In some cases, it may also or alternatively be necessary to change the state of the mapping to validly read or write an architectural register as will be further discussed herein.

Fixup uops may be injected into or ahead of the uops for an instruction to pack and/or unpack the registers into various configurations. These uops or combinations thereof may include one or more of the example fixup uops described in Table 6. It is noted that the names for these uops are arbitrary. It is also noted that the physical register bits are described with respect to a 128 bit quad, however other bit widths may be used change-for-change as appropriate for other architectures.

**Table 6**

| | |
|---|---|
| fkregq2d | Takes the upper bits (e.g., 127:64) of the source PRN and places them into the lower bits (e.g., 63:0) of the destination PRN, and zeros the upper register (e.g., bits 127:64) of the destination PRN. Does not return PRNs to free list. |
| <source> | |
| <destina tion> | |
| fkregd2s | Takes bits 63:32 of the source PRN and places them into bits 31:0 of the destination PRN, zeroing upper register (e.g., bits 127:32) of the destination PRN. Does not return PRNs to free list. |
| <source> | |
| <destina tion> | |
| fkregs2d | Takes bits 31:0 of the source 1 PRN and places them into bits 31:0 of the destination PRN, takes bits 31:0 of the source 2 PRN and places them into bits 63:0 of destination PRN, zeroing the rest (e.g. bits 127:64) of the destination register. Returns the PRN for source 1 to the free list. |
| <source 1> | |
| <source 2> | |
| <destina tion> | |
| fkregd2q | Takes bits 63:0 of the source 1 PRN and places them into bits 63:0 of the destination PRN, and takes bits 63:0 of the source 2 PRN and places them into bits 127:64 of the destination PRN. Returns the PRN for source 1 to free list. |
| <source 1> | |
| <source 2> | |
| <destina tion> | |
| fkreclaimprn | Puts the PRN for the source back on free list, but leaves it mapped in the register map. The PRN must be atomically retired using one of the other repacking ops fkregs2d or fkregd2q which will recover the data from the PRN which this uop puts on the free list. |
| <source> | |

To determine whether it is necessary to inject one or more of these fixup uops and/or to change the state of a quad, a suitable part of the processor detects any aliasing among the operand architectural registers of an instruction and among any other instructions being renamed (i.e., whether they share a quad), checks the state for any such registers, determines which if any uops must be injected for the instruction to validly read or write such register based on the state, and determines to which if any state the register state must be changed. These determinations may be made by a decode unit or aliasing logic which receives information about the operand registers of the decoded instruction from the decode unit for example, although it is noted that these determinations may be made by any suitable structure.

Tables 7 - 13 illustrate example state transitions and uop injections which may be necessary for reads or writes to an architectural register based upon the current state of the quad (i.e., the state of the LRN-PRN mapping for the quad within which the architectural register is packed). The state names are denoted with respect to Q0, but are relevant to any of the packed architectural registers Q0 - Q15 change for change as will be further illustrated herein.

**Table 7**

| Current State and PRNs | Action | Next State and PRNs | Packing/unpacking ops | State after packing/unpacking |
|---|---|---|---|---|
| Quad A-A-A-A | Read Quad/D0/S0 | | | |
| | Read D1 | | fkregq2d D1, Q0 | Q/D1 |
| | Read S1 | | fkregq2d D1, Q0 | Q/D1 |
| | | | fkregd2s S1, D0 | S0/S1/D1 |
| | Read S2 | | fkregq2d D1, Q0 | Q/D1 |
| | Read S3 | | fkregq2d D1, Q0 | Q/D1 |
| | | | fkregd2s S3, D1 | D0/S2/S3 |
| | Write D1 | D0/D1 | | |
| | | A-A-B-B | | |
| | Write D0 | D0/D1 U | | |
| | | B-B-A-A | | |
| | Write S0 | | fkregq2d D1, Q0 | Q/D1 |
| | | | fkregq2s S1, D0 | S0/S1/D1 |
| | Write S1 | | fkregq2d D1, Q0 | Q/D1 |
| | Write S2 | | fkregq2d D1, Q0 | Q/D1 |
| | | | fkregd2s S3, D1 | D0/S2/S3 |
| | Write S3 | | fkregq2d D1, Q0 | Q/D1 |
| | Unpack D1 | Quad/D1 | | |
| | | A-A-B-B | | |

**Table 8**

| Current State and PRNs | Action | Next State and PRNs | Packing/un packing ops | State after packing/unpacking |
|---|---|---|---|---|
| D0/D1 A-A-B-B | Read Quad | | fkreclaimprn D1 fkregd2q Q0, D0, D1 | (Atomic sequence) Quad |
| | Read D0 | | | |
| | Read D1 | | | |
| | Read S0 | | | |
| | Read S2 | | | |
| | Read S1 | | fkregd2s S1, D0 | S0/S1/D1 |
| | Read S3 | | fkregd2s S3, D1 | D0/S2/S3 |
| | Write S0 | | fkregd2s S1, D0 | S0/S1/D1 |
| | Write S2 | | fkregd2s S3, D1 | D0/S2/S3 |
| | Write S1 | S0/S1/D1 | | |
| | | A-C-B-B | | |
| | Write S3 | D0/S2/S3 | | |
| | | A-A-B-C | | |
| | Write D0 | D0/D1 | | |
| | | C-C-B-B | | |
| | Write D1 | D0/D1 | | |
| | | A-A-C-C | | |
| | Write Quad | | fkreclaimprn D1 fkregd2q Q0, D0, D1 | (Atomic Sequence) Quad |
| | Unpack S1 | S0/S1/D1 | | |
| | | A-C-B-B | | |
| | Unpack S3 | D0/S2/S3 | | |
| | | A-A-B-C | | |
| | Pack Quad | Quad/D1 | | |
| | | C-C-B-B | | |

**Table 9**

| Current State and PRNs | Action | Next State and PRNs | Packing/un packing ops | State after packing/unpacking |
|---|---|---|---|---|
| D0/D1U B-B-A-A | Read Quad | | fkreclaimprn D1 fkregd2qh Q0, D0, D1 | (Atomic Sequence) Quad |
| | Read D0 | | | |
| | Read S0 | | | |
| | Read D1 | | fkregq2d D1, D1 | D0/D1 |
| | Read S1 | | fkregq2d D1, D1 | D0/D1 |
| | | | fkregd2s S1, D0 | S0/S1/D1 |
| | Read S2 | | fkregq2d D1, D1 | D0/D1 |
| | Read S3 | | fkregq2d D1, D1 | D0/D1 |
| | | | fkregd2s S3, D1 | D0/S2/S3 |
| | Write D0 | D0/D1U | | |
| | | C-C-A-A | | |
| | Write D1 | D0/D1 | | |
| | | B-B-C-C | | |
| | Write S0 | | fkregq2d D1, D1 | D0/D1 |
| | | | fkregd2s S1, D0 | S0/S1/D1 |
| | Write S1 | | fkregq2d D1, D1 | D0/D1 |
| | Write S2 | | fkregq2d D1, D1 | D0/D1 |
| | | | fkregd2s S3, D1 | D0/S2/S3 |
| | Write S3 | | fkregq2d D1, D1 | D0/D1 |

**Table 10**

| Current State and PRNs | Action | Next State and PRNs | Packing/unpacking ops | State after packing/unpacking |
|---|---|---|---|---|
| | Read Quad | | fkreclaimprn S1 | (Atomic Sequence) D0/D1 |
| S0/S1/D1 C-D-B-B | | | fkregs2d D0, S0, S1 | |
| | | | fkreclaimprn D1 | (Atomic Sequence) Quad |
| | | | fkregd2q Q, D0, D1 | |
| | Read S0 | | | |
| | Read S1 | | | |
| | Read D1 | | | |
| | Read S2 | | | |
| | Read D0 | | fkreclaimprn S1 | (Atomic Sequence) D0/D1 |
| | | | fkregs2d D0, S0, S1 | |
| | Read S3 | | fkregd2s S3, D1 | S0/S1/S2/S3 |
| | Write S0 | S0/S1/D1 | | |
| | | E-D-B-B | | |
| | Write S1 | S0/S1/D1 | | |
| | | C-E-B-B | | |
| | Write D1 | S0/S1/D1 | | |
| | | C-D-E-E | | |
| | Write Quad | | fkreclaimprn S1 fkregs2d D0, S0, S1 | (Atomic Sequence) D0/D1 |
| | | | fkreclaimprn D1 fkregd2q Q, D0, D1 | (Atomic Sequence) Quad |
| | Write D0 | | fkreclaimprn S1 fkregs2d D0, S0, S1 | (Atomic Sequence) D0/D1 |
| | Write S2 | | fkregd2s S3, D1 | S0/S 1/S2/S3 |
| | Write S3 | S0/S1/S2/S3 | | |

**Table 11**

| Current State and PRNs | Action | Next State and PRNs | Packing/un packing ops | State after packing/unpacking |
|---|---|---|---|---|
| D0/S2/S3 A-A-B-C | Read Quad | | fkreclaimprn S3 | (Atomic Sequence) D0/D1 |
| | | | fkregs2d D1, S2, S3 | |
| | | | fkreclaimprn D1 | (Atomic Sequence) Quad |
| | | | fkregd2q Q, D0, D1 | |
| | Read D0 | | | |
| | Read S0 | | | |
| | Read S2 | | | |
| | Read S3 | | | |
| | Read D1 | | fkreclaimprn S3 | (Atomic Sequence) D0/D1 |
| | | | fkregs2d D1, S2, S3 | |
| | Read S1 | | fkregd2s S1, D0 | S0/S1/S2/S3 |
| | Write Quad | | fkreclaimprn S3 | (Atomic Sequence) D0/D1 |
| | | | fkregs2d D1, S2, S3 | |
| | | | fkreclaimprn D1 | (Atomic Sequence) Quad |
| | | | fkregd2q Q0, D0, D1 | |
| | Write D1 | | fkreclaimprn S3 | (Atomic Sequence) D0/D1 |
| | | | fkregs2d D1, S2, S3 | |
| | Write D0 | D0/S2/S3 | | |
| | | D-D-B-C | | |
| | Write S2 | D0/S2/S3 | | |
| | | A-A-D-C | | |
| | Write S3 | D0/S2/S3 | | |
| | | A-A-B-D | | |
| | Write S1 | S0/S1/S2/S 3 | | |
| | | A-D-B-C | | |

**Table 12**

| Current State and PRNs | Action | Next State and PRNs | Packing/unpacking ops | State after packing/unpacking |
|---|---|---|---|---|
| | Read Quad/D0 /D1 | | fkreclaimprn S3 | (Atomic Sequence) S0/S 1/D 1 |
| S0/S1/S2/S3 A-B-C-D | | | fkregs2d D1, S2, S3 | |
| | | | fkreclaimprn S1 | (Atomic Sequence) D0/D1 |
| | | | fkregs2d D0, S0, S1 | |
| | | | fkreclaimprn D1 | (Atomic Sequence) |
| | | | fkregd2q Q0, D0, D1 | Quad |
| | Read D0 | | fkreclaimprn S1 | (Atomic Sequence) D0/S2/S3 |
| | | | fkregs2d D0, S0, S1 | |
| | Read D1 | | fkreclaimprn S1 | (Atomic Sequence) D0/S2/S3 |
| | | | fkregs2d D0, S0, S1 | |
| | Read S0 | | | |
| | Read S1 | | | |
| | Read S2 | | | |
| | Read S3 | | | |
| | Write Quad | | fkreclaimprn S3 | (Atomic Sequence) S0/S 1/D 1 |
| | | | fkregs2d D1, S2, S3 | |
| | | | fkreclaimprn S1 | (Atomic Sequence) D0/D1 |
| | | | fkregs2d D0, S0, S1 | |
| | | | fkreclaimprn D1 | (Atomic Sequence) Quad |
| | | | fkregd2q Q0, D0, D1 | |
| | Write D0 | | fkreclaimprn S1 | (Atomic Sequence) |
| | | | fkregs2d D0, S0, S1 | D0/S2/S3 |
| | Write D1 | | fkreclaimprn S3 | (Atomic Sequence) |
| | | | fkregs2d D1, S2, S3 | S0/S 1/D 1 |
| | Write S0 | SO/S1/S2/S3 | | |
| | | E-B-C-D | | |
| | Write S1 | S0/S1/S2/S3 | | |
| | | A-E-C-D | | |
| | Write S2 | S0/S1/S2/S3 | | |
| | | A-B-E-D | | |
| | Write S3 | S0/S1/S2/S3 | | |
| | | A-B-C-E | | |

**Table 13**

| Current State and PRNs | Action | Next State and PRNs | Packing/unpacking ops | State after packing/unpacking |
|---|---|---|---|---|
| Quad/D1 | Read Quad | | | |
| | Read D0 | | | |
| A-A-B-B | Read D1 | | | |
| | Read S0 | | | |
| | Read S1 | | fkregd2s S1, D0 | S0/S1/D1 |
| | Read S2 | | | |
| | Read S3 | | fkregd2s S3, D1 | D0/S2/S3 |
| | Write Quad | | fkreclaimprn D1 | (Atomic Sequence) Quad |
| | | | fkregd2q Q, D0, D1 | |
| | Write D0 | D0/D1 | | |
| | | C-C-B-B | | |
| | Write D1 | D0/D1 | | |
| | | A-A-C-C | | |
| | Write S0 | | fkregd2s S1, D0 | S0/S1/D1 |
| | Write S1 | S0/S1/D1 | | |
| | | A-C-B-B | | |
| | Write S2 | | fkregd2s S3, D1 | D0/S2/S3 |
| | Write S3 | D0/S2/S3 | | |
| | | A-A-B-C | | |
| | Pack D1 | Quad | | |
| | | C-C-C-C | | |
| | Unpack S1 | S0/S1/D1 | | |
| | | A-C-B-B | | |
| | Unpack S3 | D0/S2/S3 | | |
| | | A-A-B-C | | |

To track the state for each quad, a register state table may be maintained. Table 14 illustrates a register state table reflecting an example state of the registers packed with architectural registers Q0 - Q3,

**Table 14**

| Register State |
|---|
| Q0: Q |
| Q1: Q |
| Q2: Q |
| Q3: Q |
| ... |

FIG. 3 is a block diagram illustrating example circuitry 300 for decoding instructions and handling aliasing effects as described above. Circuitry 300 includes instruction extraction logic 305, instruction decode units 310, 315, 320, aliasing and state tracking logic 325, and uop buffer 330. Circuitry 300 may be a part of a processor such as processor 102 (FIG. 2). It is noted that these units are examples only, and may be substituted or omitted as appropriate in some implementations.

Extraction logic 305 receives a stream of instructions, extracts N instructions from the stream (floating point instructions in this example), and loads the instructions into N decode units. Three decode units 310, 315, 320 are shown, however it is noted that the number of decode units and extracted instructions can be greater or less as desired.

The extraction logic 305 may receive the stream of instructions from an instruction fetch unit (not shown) or from any other suitable source. The extraction logic 305 may then load the extracted instructions into decode units 310, 315, 320. Although only three decode units are shown for decoding three extracted instructions, in principle an arbitrary number of decode units may be used for decoding an arbitrary number of extracted instructions.

Decode unit 310 decodes the instruction INST1 into one or more uops for execution and loads the decoded uops into uop buffer 330. It is noted that in some implementations (not shown) uop buffer 330 may be omitted, and the uops may simply be dispatched downstream to execution unit 335. Decode unit 310 also transmits information about the operand registers of INST1 to logic 325. Decode unit 315 decodes the instruction INST2 into one or more uops for execution and loads the decoded uops into uop buffer 330. Decode unit 315 also transmits information about the operand registers of INST2 to logic 325. Decode unit 320 decodes the instruction INST3 into one or more uops for execution and loads the decoded uops into uop buffer 330. Decode unit 320 also transmits information about the operand registers of INST3 to logic 325. It is noted that decode units 315, 320, 325 may decode the three instructions concurrently; however the instructions may be decoded non-concurrently in other implementations.

Logic 325 checks the state of the LRN-PRN mapping for each operand register of INST1 to determine if it is valid. If the state mapping is invalid, logic 325 determines whether uops must be injected and determines whether a state change is required. If uop injection is necessary, logic 325 injects the appropriate fixup uops ahead of the decoded uops for INST1 in the uop buffer 330. As discussed above, it is noted that in some implementations (not shown) uop buffer 330 may be omitted, and the uops may simply be injected ahead of the decoded uops for INST1 and dispatched downstream to execution unit 335. If a state change is required, logic 325 updates the state of the mapping for the quad. Logic 325 also performs these same tasks for INST2 and INST3.

After all decoded ops for INST1, INST2, and INST3 have been loaded into buffer 330, any required fixup ops are injected, and state has been updated as required, the queue of uops in uop buffer 330 may be dispatched to one or more execution units 335 for execution. As mentioned above, in implementations which do not use a uop buffer (not shown) the uops may already have been dispatched downstream to execution unit 335.

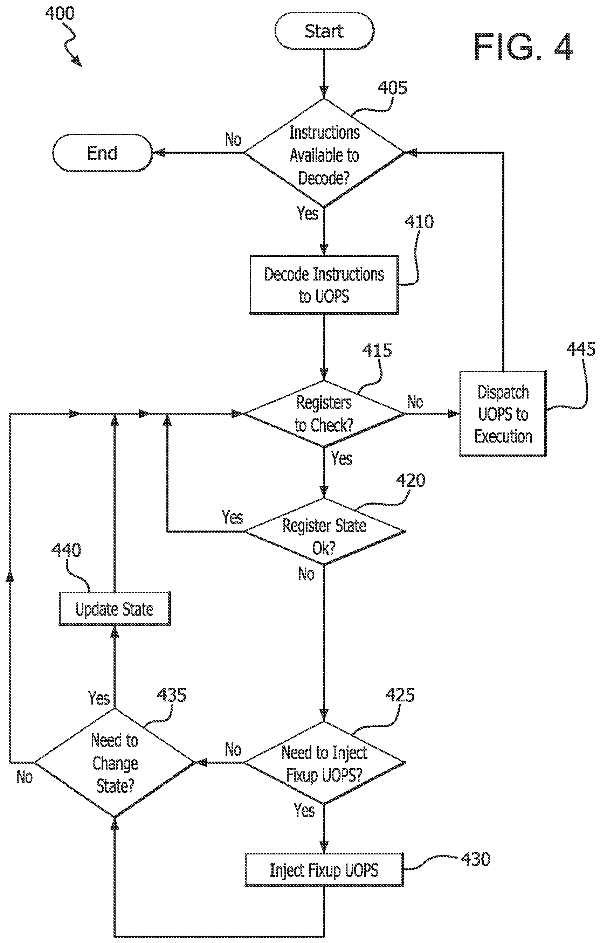

FIG. 4 is a flow chart illustrating an example method 400 for decoding instructions as described above.

In step 405 it is determined whether any instructions are available to decode. If instructions are available to decode, they are decoded into uops in step 410. The determination may be made by decode units and the uops may be buffered such as is discussed with respect to FIG. 3.

In step 415, it is determined whether any of the operand registers of the instructions have yet to be checked for valid LRN-PRN state mapping. If so, the state each register is checked in step 420. These determinations may be made by aliasing logic which receives information regarding the operand registers such as is discussed with respect to FIG. 3.

It is noted that in some implementations (not shown) the validity of LRN-PRN state mapping may be checked before or concurrently with decoding of uops.

If the register state is determined not to be valid, it is determined whether it is necessary to inject fixup uops in step 425. This determination may be made by the aliasing logic. If it is necessary to inject fixup uops, they are injected in step 430. The fixup uops may be injected into a uop queue ahead of the decoded uops for the instruction and may be buffered such as is discussed with respect to FIG. 3.

Whether or not it is determined to inject uops in step 425, it is also determined whether it is necessary to change the state of the LRN-PRN mapping in step 435. If so, the mapping is updated in step 440. In either event, the flow returns to step 415.

If there are no further registers to check for valid state, the decoded and injected uops may be dispatched for execution in step 445.

The following example parallel decoding of three floating point instructions is illustrative of the principles discussed herein, and may be carried out using the structures and methods discussed with respect to FIGS. 1 - 4. However, it is noted that many modifications and elaborations may be possible. For this example, the initial state of the LRN-PRN mapping for each quad (i.e., the register state) is shown by Table 15. It is noted that only four quads are used in this example and accordingly only four states will be illustrated.

**Table 15**

| Register State |
|---|
| Q0: Q |
| Q1: Q |
| Q2: Q |
| Q3: Q |
| ... |

The initial LRN-PRN mapping (i.e., the register map) is shown by Table 16.

**Table 16**

| Register Map: | | | | |
|---|---|---|---|---|
| Q0 | Q1 | Q2 | Q3 | .. |
| Q0/D0/S0:PRNA | Q1/D2/S4:PRNB | Q2/D4/S8:PRNC | Q3/D6/S12:PRND | .. |
| S1:PRNA | S5:PRNB | S9:PRNC | S13:PRND | .. |
| D1/S2:PRNA | D3/S6:PRNB | D5/S10:PRNC | D7/S14:PRND | .. |
| S3:PRNA | S7:PRNB | S11:PRNC | S15:PRND | .. |
| | | | | |

The initial contents of the physical register file (PRF) are shown by Table 17.

**Table 17**

| | | | | |
|---|---|---|---|---|
| PRNA: | S3 | S2 | S1 | S0 |
| | D1 | | D0 | |
| | Q0 | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | S15 | S14 | S13 | S13 |
| | D7 | | D6 | |
| | Q3 | | | |

The three example floating point instructions to be decoded in this example are:
INST1: Add Q0 = Q1 + Q2
INST2: Sub D0 = D1 - D2
INST3: Mul Q3 = Q0 * Q1

In this example, the instructions are decoded in parallel by decode units 310, 315, 320 as shown in FIG. 3. However, it is noted that the instructions may be decoded in sequence or out of sequence in other implementations.

Decode unit 310 decodes INST1 and passes the uops for INST1 downstream into buffer 330 for later execution. Decode unit 310 also transmits information to logic 325 indicating that its operands are registers Q0, Q1, and Q2. Logic 325 detects that the architectural registers Q0, Q1, and Q2 are not aliased with one another. Accordingly, no uops are required to be injected ahead of the uops for INST1 and the register states do not need to be changed.

Decode unit 315 decodes INST2 and passes the uops for INST2 downstream into buffer 330 for later execution behind the uops for INST1. Decode unit 315 also transmits information to logic 325 indicating that its operands are registers D0, D1, and D2.

Logic 325 detects that register D2 is aliased with Q1, which is in state Q. Logic 325 also detects register aliasing of the read of D1 and write of D0 with Q0, which is in state Q.

D2 is readable from Q1 in state Q. This is because D2 is the lower double of Q1, and is valid for reading when Q1 is in state Q. Accordingly, logic 325 does not inject any uops ahead of the uops for INST2 and does not change the register states for this aliasing.

D1 is not valid for reading when Q0 is in state Q. Accordingly; the read of D1 requires injection of fkregq2d D1, Q0 and state transition of Q0 from Q to Q0/D1. Accordingly, logic 325 injects this uop ahead of the uops for INST2 in the queue and updates the state bits for Q0 to reflect state Q0/D1. This is done because D1 is the upper double, and is not aligned with the LSB of the physical registers when Q0 is in state Q.

The injected uop fkregq2d D1, Q0 will take the upper double of the physical register storing Q0 (i.e., the upper 64 bits - the data for D1) and write this data to the lower double of a new physical register. D1 will be mapped to this new physical register after this uop is executed, and the data for D1 will be aligned with the LSB of the physical register and thus may be validly read. It is noted that this uop will not return the PRN to the free list, and the original data will remain in the original physical registers.

After this unpacking, the state of Q0 (which represents all architectural registers packed within Q0) will be changed to Q/D1 to indicate that reads that would be valid for the quad state are still valid (i.e., this data remains in the original physical register as before) but that reads of D1 are now also valid, because D1 is mapped to a new physical register.

D0 can be written when Q0 is in state Q/D1 without injecting any uops. However following the write, D0 will be mapped to a new physical register and D1 will remain available for valid reads in the other physical register. Q0 therefore will no longer be directly readable, and thus the state of Q0 must be updated from Q/D1 to D1/D0. Accordingly, logic 325 updates the state bits for Q0 to reflect state D1/D0.

The register state at this point is reflected by Table 18.

**Table 18**

| Register State |
|---|
| Q0: D0/D1 |
| Q1: Q |
| Q2: Q |
| Q3: Q |
| ... |

Decode unit 320 decodes INST3 and passes the uops for INST3 downstream into buffer 330 for later execution behind the uops for INST2. Decode unit 320 also transmits information to logic 325 indicating that its operands are registers Q3, Q0, and Q1. Logic 325 detects that register Q0 is aliased with D0 and D1.

Q0 is in state D0/D1, and Q0 cannot be directly read in this state. This is because the D0 and D1 registers are mapped to different physical registers. To read Q0, the state must be changed by injecting uops. Accordingly, logic 325 injects two consecutive uops ahead of the uops for INST3. The first uop (fkreclaimprn D1) puts the physical register to which D1 is mapped back on the free list, but leaves it mapped in the register map. This is a preparatory step for the second uop. The second uop (fkregd2q Q0, D0, D1) allocates a new physical register for Q0, writes the lower double from the physical register mapped to D0 to the lower double of the new physical register, and writes the lower double from the physical register mapped to D1 to the upper double of the new register. This "reassembles" the quad in the new register, making it valid for reading Q0. Thus the state for the registers packed into Q0 is then changed to Q. It is noted that in some implementations (not shown) the fkreclaimprn D1 uop could be omitted, and the state could be changed to Q/D1, leaving the PRN for D1 mapped. It is also noted that fkreclaimprn uops may always be executed atomically with a second fixup uop (here fkregd2q) as shown in Table 6 for example.

The register state at this point is reflected by Table 19.

**Table 19**

| Register State |
|---|
| Q0: Q |
| Q1: Q |
| Q2: Q |
| Q3: Q |
| ... |

After decoding the instructions, injecting uops, and/or changing the register state as appropriate, the queue of instruction uops is:
1) uops for add Q0 = Q1 + Q2
2) uop for fkregq2d D1, Q0
3) uops for Sub D0 = D1 - D2
4) uop for fkreclaimprn D1
5) uop for fkregd2q Q0, D1
6) uops for mul Q3 = Q0 * Q1

Once the instructions have been thus decoded, fixup uops have been injected, and states have been updated as appropriate, the uops may be processed by register map logic of logic 325 as follows.

When a decoded uop or uops for add Q0 = Q1 + Q2 is/are processed by the register map logic, a new PRN (PRNE) for storing Q0 is mapped to LRNs for architectural registers packed within Q0 (i.e., Q0/D0/S0, S1, D1/S2, and S3). The operation is also transformed using the mapping to Add PRNE = PRNB + PRNC. The state of the register map after this operation is shown by Table 20.

**Table 20**

| Register Map: | | | | |
|---|---|---|---|---|
| Q0 | Q1 | Q2 | Q3 | .. |
| Q0/D0/S0:PRNE | Q1/D2/S4:PRNB | Q2/D4/S8:PRNC | Q3/D6/S12:PRND | .. |
| S1:PRNE | S5:PRNB | S9:PRNC | S13:PRND | .. |
| D1/S2:PRNE | D3/S6:PRNB | D5/S10:PRNC | D7/S14:PRND | .. |
| S3:PRNE | S7:PRNB | S11:PRNC | S15:PRND | .. |

When an injected uop or uops for fkregq2d D1, Q0 is/are processed by the register map logic, a new PRN (PRNF) for storing D1 is mapped to LRNS for architectural registers packed within D1 (i.e., D1/S2 and S3). The operation is also transformed using the mapping to fkregq2d PRNF = PRNE[127:64]. The state of the register map after this operation is shown by Table 21.

**Table 21**

| Register Map: | | | | |
|---|---|---|---|---|
| Q0 | Q1 | Q2 | Q3 | .. |
| Q0/D0/S0:PRNA | Q1/D2/S4:PRNB | Q2/D4/S8:PRNC | Q3/D6/S12:PRND | .. |
| S1:PRNA | S5:PRNB | S9:PRNC | S13:PRND | .. |
| D1/S2:PRNF | D3/S6:PRNB | D5/S10:PRNC | D7/S14:PRND | .. |
| S3:PRNF | S7:PRNB | S11:PRNC | S15:PRND | .. |

When a decoded uop or uops for sub D0 = D1 - D2 is/are processed by the register map logic, a new PRN (PRNG) for storing D0 is mapped to LRNs for architectural registers packed within D0 (i.e., Q0/D0/S0 and S1). The operation is transformed using the mapping to SUB PRNG = PRNF - PRNC. The state of the register map after this operation is shown by Table 22.

**Table 22**

| Register Map: | | | | |
|---|---|---|---|---|
| Q0 | Q1 | Q2 | Q3 | .. |
| Q0/D0/S0:PRNG | Q1/D2/S4:PRNB | Q2/D4/S8:PRNC | Q3/D6/S12:PRND | .. |
| S1:PRNG | S5:PRNB | S9:PRNC | S13:PRND | .. |
| D1/S2:PRNF | D3/S6:PRNB | D5/S10:PRNC | D7/S14:PRND | .. |
| S3:PRNF | S7:PRNB | S11:PRNC | S15:PRND | .. |

When an injected uop or uops for fkreclaimprn D1 is/are processed by the register map logic, there is no change to the register map, and the operation is transformed using the mapping to fkreclaimprn PRNF.

When an injected uop or uops for fkregd2q Q0, D1 is/are processed by the register map logic, a new PRN (PRNH) for storing Q0 is mapped to LRNs for architectural registers packed within Q0 (i.e., Q0/D0/S0, S1, D1/S2, and S3). The operation is transformed to fkregd2q PRNH[127:0] = PRNF[63:0],PRNG[63:0]. The state of the register map after this operation is shown by Table 23.

**Table 23**

| Register Map: | | | | |
|---|---|---|---|---|
| Q0 | Q1 | Q2 | Q3 | .. |
| Q0/D0/S0:PRNH | Q1/D2/S4:PRNB | Q2/D4/S8:PRNC | Q3/D6/S12:PRND | .. |
| S1:PRNH | S5:PRNB | S9:PRNC | S13:PRND | .. |
| D1/S2:PRNH | D3/S6:PRNB | D5/S10:PRNC | D7/S14:PRND | .. |
| S3:PRNH | S7:PRNB | S11:PRNC | S15:PRND | .. |

When a decoded uop or uops for Mul Q3 = Q0 × Q1 is/are processed by the register map logic, a new PRN (PRNI) for storing Q3 is mapped to LRNs for architectural registers packed within Q3 (i.e., Q3/D6/S12, S13, D7/S14, S15). The operation is transformed using the mapping to mul PRNI = PRNH × PRNB. The state of the register map after this operation is shown by Table 24.

**Table 24**

| Register Map: | | | | | | | | |
|---|---|---|---|---|---|---|---|---|
| Q0 | | Q1 | | Q2 | | Q3 | | .. |
| Q0/D0/S0 | :PRNH | Q1/D2/S4 | :PRNB | Q2/D4/S8 | :PRNC | Q3/D6/S12 | :PRNI | .. |
| S1 | :PRNH | S5 | :PRNB | S9 | :PRNC | S13 | :PRNI | .. |
| D1/S2 | :PRNH | D3/S6 | :PRNB | D5/S10 | :PRNC | D7/S14 | :PRNI | .. |
| S3 | :PRNH | S7 | :PRNB | S11 | :PRNC | S15 | :PRNI | .. |

After all of the uops have been processed by the register map logic, they may be executed by an execution unit 335 (or units), resulting in changes to the PRF file as follows.
a. add PRNE = PRNB + PRNC (from add Q0 = Q1 + Q2). The PRF state after the corresponding ops are executed is shown by Table 25.

**Table 25**

| Physical Register File: | | | | |
|---|---|---|---|---|
| PRNA: | Unmapped - Returned to Free List - xx | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | S15 | S14 | S13 | S13 |
| | D7 | | D6 | |
| | Q3 | | | |
| PRNE: | S3 | S2 | S1 | S0 |
| | D1 | | D0 | |
| | Q0 | | | |

b. fkregq2d PRNF = PRNE[127:64] (from fkregq2d D1, Q0). PRF state after the corresponding ops are executed is shown by Table 26.

**Table 26**

| Physical Register File: | | | | |
|---|---|---|---|---|
| PRNA: | Unmapped - xx | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | S15 | S14 | S13 | S13 |
| | D7 | | D6 | |
| | Q3 | | | |
| PRNE: | S3 | S2 | S1 | S0 |
| | D1 | | D0 | |
| | Q0 | | | |
| PRNF: | xx | xx | S3 | S4 |
| | xx | | D1 | |
| | xx | | | |

c. sub PRNG = PRNF - PRNB (from sub D0 = D1 - D2). PRF state after the corresponding ops are executed is shown by Table 27.

**Table 27**

| Physical Register File: | | | | |
|---|---|---|---|---|
| PRNA: | Unmapped - xx | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | S15 | S14 | S13 | S13 |
| | D7 | | D6 | |
| | Q3 | | | |
| PRNE: | Unmapped _ Returned to Free List - xx | | | |
| PRNF: | xx | xx | S3 | S4 |
| | xx | | D1 | |
| | xx | | | |
| PRNG: | xx | xx | S1 | S0 |
| | xx | | D0 | |
| | xx | | | |

d. fkreclaimprn PRNF (from fkreclaimprn D1). No change to PRF until fkreclaimprn retires, upon which the register is returned to the free list, however fkreclaimprn must be retired with following uop. Accordingly, the PRF effect will occur after fkregd2q which is atomic with fkreclaimprn.
e. fkregd2q PRNH[127:0] = PRNF[63:0],PRNG[63:0] (fkregd2q Q0, D1). The PRF state after the corresponding ops are executed is shown by Table 28.

**Table 28**

| Physical Register File: | | | | |
|---|---|---|---|---|
| PRNA: | Unmapped - xx | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | S15 | S14 | S13 | S13 |
| | D7 | | D6 | |
| | Q3 | | | |
| PRNE: | Unmapped - xx | | | |
| PRNF: | Unmapped - Returned to Free List - xx | | | |
| PRNG: | Unmapped - Returned to Free List - xx | | | |
| PRNH: | S3 | S2 | S1 | S0 |
| | D1 | | D0 | |
| | Q0 | | | |

f. mul PRNI = PRNH × PRNB (from mul Q3 = Q0 × Q1). The PRF state after the corresponding ops are executed is shown by Table 29.

**Table 29**

| Physical Register File: | | | | |
|---|---|---|---|---|
| PRNA: | Unmapped - xx | | | |
| PRNB: | S7 | S6 | S5 | S4 |
| | D3 | | D2 | |
| | Q1 | | | |
| PRNC: | S11 | S10 | S9 | S8 |
| | D5 | | D4 | |
| | Q2 | | | |
| PRND: | Unmapped - Returned to Free List - xx | | | |
| PRNE: | Unmapped - xx | | | |
| PRNF: | Unmapped - xx | | | |
| PRNG: | Unmapped - xx | | | |
| PRNH: | S3 | S2 | S1 | S0 |
| | D1 | | D0 | |
| | Q0 | | | |
| PRNI: | S15 | S14 | S13 | S13 |
| | D7 | | D6 | |
| | Q3 | | | |

In some implementations, the packing of a particular register may be tracked over time to optimize the decoding of instructions. Such tracking may be done in the aliasing and state tracking logic or another suitable part of the processor, and may be used to minimize the need to inject repacking uops. For example, if a stream of instructions includes a small number of instructions which access a particular register in a way that conflicts with the majority use of that register, the processor may change the way it decodes that small number of instructions. More specifically, if the stream of instructions includes a small number of instructions which access a particular packed register using a register size that conflicts with a size by which the register is usually accessed, the processor may change the way those instructions with conflicting sizes are decoded.

Such conflicts may arise as a result of the structure of the ISA. For example, in an ISA which includes only one sized load or store instruction (e.g. 64 bits) other instructions may utilize the results of those loads or stores as a different size (e.g. 128 bits.) Such conflicts may also arise due to a particular coding style which results in a similar behavior. For example, a particular program may load or store data in one size or a set of sizes and operate on the stored data as a different size or set of sizes, even where the ISA is not constrained in this way.

To address such cases, a history of the packing of the registers may be tracked. In some implementations, one or more counters may be maintained for each register in order to track the size of accesses. A saturating counter may be used for such purposes. For example, a saturating counter may be maintained for accesses to Q0 for example, where such counter is incremented for each quad-sized access and decremented for each double-sized access. A threshold point may be determined, whereupon the processor will either inject 2 64 bit loads uops or 1 128-bit load uop depending upon whether Q0 is more frequently accessed as a quad or as a double. It is noted that other history tracking strategies are possible.

For example, a history of fixup uop injections may also or alternatively be tracked, and the processor may use this historical information to detect situations where decoding an instruction differently could yield better performance. In some implementations, the address of the instruction that is being decoded could be analyzed using a hashing algorithm and such histories could be stored in memory for each register. To illustrate, if Q0 (e.g. 128 bits) is first loaded in two halves (e.g. first loading D0 and then loading D1) and is later accessed as a quad register (e.g. 128 bits), uops may be injected to first unpack Q0 prior to loading, and a uop may also be injected to repack Q0 prior to access. However if a particular stream of instructions primarily accesses Q0 as a quad register (e.g. 128 bits) and primarily loads the register in two halves (e.g. first loading D0 then loading D1), the processor may detect this by tracking the injection of uops for the instruction stream over time. Once this behavior is detected (e.g. using a history, saturating counter, or statistically for example as described above), instead of sending uops to perform 2 64 bit loads to the consecutive D registers, the processor may issue only 1 128-bit load uop to the full quad register, eliminating the need to unpack Q0 before loading and to repack Q0 after loading prior to use. Such detection may have the advantage of improving performance by reducing the net number of uops required for loading and storing. Various other permutations of this tracking will be evident to those having skill in the art.

The following example optimizations may be performed as a function of register mapping. As discussed above, there may be only one fixed supported load size in some architectures. For example, the only supported load size for an example vector load instruction VLD* may be 64 bits. In this case, any instruction which performs 128-bit arithmetic would necessarily use data which was previously loaded in two 64-bit chunks.

In this case, the current mapping of the destination register along with the length of the load and the starting destination register number may be used by the processor to determine whether to load the data as a double or a quad. If the instruction loads an even number of registers, the first register is an even register number, and the current map shows that the destinations were previously used as quads, the data may be loaded as quads. If the instruction loads an odd number of registers, starts with an odd numbered register, or the current mapping shows the previous use of the register was not a quad, the data may be loaded as doubles.

Similar optimizations may be applicable to store instructions. It may be possible to store a source as doubles or quads depending on the current mapping, whether an even or odd number of registers is stored, and whether the store begins with an even or odd register.

In general, instructions which lengthen the data (i.e., write to an architectural register that is longer than one or more of the source registers) may be susceptible to such optimization. An example of such instruction may have one or both of the sources specified as double registers, and the destination specified as a quad register. Because of the way these instructions are decoded into uops, it may be possible to execute such instructions without unpacking the sources if they are currently packed as quads and if the decoder can transform the uops in the sequence.

For example, an instruction VADDL.S8 <Qd>, <Dn>, <Dm> may be broken down into two shuffle uops which lengthen the data in Dn and Dm and a third uop to perform the add. A shuffle uop may lengthen a register of an instruction, for example from either the upper or lower bits (64 bits). In a specific example, fkpmovsxbw <destination> <source> may be used to lengthen data packed in bits 63:0 of the source, while fkpmovsxbwh <destination> <source> may be used to lengthen data packed in bits 127:64 of the source. For example, in a case where the instruction source is an odd D register which is currently packed as bits 127:64 a quad, the fkpmovsxbwh uop can be used instead of the fkpmovsxbw, and the register may not need to be unpacked with injected uops. If the first two shuffle ops are transformed based upon whether the register is odd or even and whether the register is packed as a quad or double, the uops may be as follows (assuming the registers are not packed as singles):
1) If (Dn is even or packed as double) then (fkpmovsxbw FT0, Dn) else (fkpmovsxbwh FT0, Qx) where x = (n-1)/2.
2) If (Dm is even or packed as double) then (fkpmovsxbw FT1, Dm) else (fkpmovsxbwh FT1, Qy) where y = (m-1)/2.
3) fkpaddw Qd, FT0, FT1

The same is true for widening instructions where only one of the sources is a double, but the other is a quad and the destination is a quad. In this case, the op transformation mentioned above may be performed for the source double.

Although various embodiments have been described with respect to a floating point unit and floating point registers, it is noted that these concepts may also be applied to other processing units and packed registers where aliasing effects may occur. For example, the concepts described herein may apply where an ISA organizes registers other than floating point registers in a densely packed configuration similar to that illustrated in FIGS. 1A and 1B.

The methods or flow charts provided herein may be implemented in a computer program, software, or firmware incorporated in a non-transitory computer-readable storage medium for execution by a general purpose computer or a processor. Examples of non-transitory computer-readable storage media include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

## Claims

1. A method for accessing data stored in an architectural register packed in at least one physical register of a physical memory, the method comprising:
decoding an instruction;
storing at least one micro-operation (uop) decoded from the instruction in a buffer for execution;
determining whether the instruction includes an access of an architectural register;
if the instruction includes an access of the architectural register, determining, based on a stored state of the architectural register, whether the architectural register is packed in a single physical register; and
if the architectural register is not packed in the single physical register, performing an action which packs the architectural register in the single physical register;
wherein the action includes injecting at least one uop into the buffer for execution prior to the uops of the instruction, wherein the at least one injected uop is based on the stored state of the architectural register and stores at least some bits of the architectural register in a second register.

2. The method of claim 1, wherein the action includes at least one of injecting at least one uop, changing the state, or aligning a least significant bit (LSB) of the architectural register with a LSB of a physical register.

3. The method of claim 1, wherein the access includes a read operation or a write operation, and the action allows the architectural register to be read or written from the single physical register.

4. The method of claim 1, wherein bits of the architectural register are stored in at least one physical register of a physical register file.

5. The method of claim 1, further comprising:
tracking at least one of the action and at least one subsequent action, the packing of the architectural register and at least one subsequent packing of the architectural register, or the state and at least one subsequent state of the architectural register, to create a history, and determining whether a future action is required or which future action is required based upon the history.

6. The method of claim 4, wherein the action includes injecting at least one uop which stores at least a portion of the bits of the architectural register in a second physical register prior to the access.

7. The method of claim 1, wherein the state indicates at least one of whether the architectural register is stored within a single physical register, whether the architectural register is stored within more than one physical register, or an order in which the architectural register is arranged within at least one physical register.

8. The method of claim 1, wherein a plurality of logical register names (LRN) are each associated with the architectural register, and wherein each LRN is mapped to a physical register name (PRN) associated with a physical register.

9. The method of claim 1, wherein the architectural register is accessible from a single physical register if a least significant bit (LSB) of the register is aligned with a LSB of a physical register.

10. The method of claim 1, wherein the architectural register is accessible from the single physical register if the register can be accessed by the instruction without moving bits of the architectural register prior to accessing the bits.

11. The method of claim 1, wherein following a write to the architectural register a larger architectural register packed within the physical register is readable.

12. A device for accessing data stored in an architectural register packed in at least one physical register of physical memory, the device comprising:
circuitry operable to decode an instruction;
circuitry operable to store at least one micro-operation (uop) decoded from the instruction in a buffer for execution;
circuitry operable to determine whether the instruction includes an access of an architectural register;
circuitry operable, if the instruction includes an access of the architectural register, to determine, based on a stored state of the architectural register, whether the architectural register is packed in a single physical register; and
circuitry operable, if the register is not packed in a single physical register, to perform an action which packs the architectural register in the single physical register;
wherein the action includes injecting at least one uop into the buffer for execution prior to the uops of the instruction, wherein the at least one injected uop is based on the stored state of the architectural register and stores at least some bits of the architectural register in a second register.

13. The device of claim 12, wherein the action includes at least one of injecting at least one uop, changing the state, or aligning a least significant bit (LSB) of the architectural register with a LSB of a physical register.

14. The device of claim 12, further comprising:
circuitry which tracks at least one of the action and at least one subsequent action, the packing of the architectural register and at least one subsequent packing of the architectural register, or the state and at least one subsequent state of the architectural register, to create a history; and
circuitry which determines whether a future action is required or which future action is required based upon the history.

15. The device of claim 12, wherein the state indicates at least one of whether the architectural register is stored within the single physical register, whether the architectural register is stored within more than one physical register, or an order in which the architectural register is arranged within at least one physical register.

## Patentansprüche

1. Verfahren zum Zugreifen auf Daten, die in einem Architekturregister gespeichert sind, das in mindestens einem physischen Register eines physischen Speichers gepackt ist, wobei das Verfahren Folgendes umfasst:
Decodieren einer Anweisung;
Speichern mindestens einer aus der Anweisung decodierten Mikrooperation (uop) in einem Puffer zur Ausführung;
Bestimmen, ob die Anweisung einen Zugriff auf ein Architekturregister beinhaltet;
wenn die Anweisung einen Zugriff auf das Architekturregister beinhaltet, Bestimmen basierend auf einem gespeicherten Zustand des Architekturregisters, ob das Architekturregister in ein einzelnes physisches Register gepackt ist; und
wenn das Architekturregister nicht in das einzelne physische Register gepackt ist, Durchführen einer Aktion, die das Architekturregister in das einzelne physische Register packt;
wobei die Aktion das Injizieren von mindestens einer uop in den Puffer zur Ausführung vor den uops der Anweisung beinhaltet, wobei die mindestens eine injizierte uop auf dem gespeicherten Zustand des Architekturregisters basiert und mindestens einige Bits des Architekturregisters in einem zweiten Register speichert.

2. Verfahren nach Anspruch 1, wobei die Aktion mindestens eines von dem Injizieren von mindestens einer uop, dem Ändern des Zustands oder dem Ausrichten eines niedrigstwertigen Bits (LSB) des Architekturregisters mit einem LSB eines physischen Registers beinhaltet.

3. Verfahren nach Anspruch 1, wobei der Zugriff eine Leseoperation oder eine Schreiboperation beinhaltet und die Aktion ermöglicht, dass das Architekturregister aus dem einzelnen physischen Register gelesen oder geschrieben wird.

4. Verfahren nach Anspruch 1, wobei Bits des Architekturregisters in mindestens einem physischen Register einer physischen Registerdatei gespeichert werden.

5. Verfahren nach Anspruch 1, ferner umfassend:
Verfolgen mindestens einer der Aktionen und mindestens einer nachfolgenden Aktion, des Packens des Architekturregisters und mindestens eines nachfolgenden Packens des Architekturregisters oder des Zustands und mindestens eines nachfolgenden Zustands des Architekturregisters, um eine Historie zu erstellen, und Bestimmen, ob eine zukünftige Aktion erforderlich ist oder welche zukünftige Aktion erforderlich ist, basierend auf der Historie.

6. Verfahren nach Anspruch 4, wobei die Aktion das Injizieren von mindestens einer uop umfasst, die vor dem Zugriff mindestens einen Teil der Bits des Architekturregisters in einem zweiten physischen Register speichert.

7. Verfahren nach Anspruch 1, wobei der Zustand mindestens eines davon angibt, ob das Architekturregister in einem einzelnen physischen Register gespeichert ist, ob das Architekturregister in mehr als einem physischen Register gespeichert ist oder einer Reihenfolge, in der das Architekturregister innerhalb mindestens eines physischen Registers angeordnet ist.

8. Verfahren nach Anspruch 1, wobei eine Vielzahl von logischen Registernamen (LRN) jeweils mit dem Architekturregister verknüpft sind und wobei jeder LRN einem physischen Registernamen (PRN) zugeordnet wird, der mit einem physischen Register verknüpft ist.

9. Verfahren nach Anspruch 1, wobei auf das Architekturregister von einem einzelnen physischen Register aus zugegriffen werden kann, wenn ein niedrigstwertiges Bit (LSB) des Registers mit einem LSB eines physischen Registers ausgerichtet ist.

10. Verfahren nach Anspruch 1, wobei auf das Architekturregister von dem einzelnen physischen Register aus zugegriffen werden kann, wenn auf das Register durch die Anweisung zugegriffen werden kann, ohne Bits des Architekturregisters vor dem Zugreifen auf die Bits zu verschieben.

11. Verfahren nach Anspruch 1, wobei nach einem Schreiben in das Architekturregister ein größeres Architekturregister, das in das physische Register gepackt ist, gelesen werden kann.

12. Vorrichtung zum Zugreifen auf Daten, die in einem Architekturregister gespeichert sind, das in mindestens einem physischen Register eines physischen Speichers gepackt ist, wobei die Vorrichtung Folgendes umfasst:
eine Schaltung, die betreibbar ist, um eine Anweisung zu decodieren;
eine Schaltung, die betreibbar ist, um mindestens eine aus der Anweisung decodierte Mikrooperation (uop) in einem Puffer zur Ausführung zu speichern;
eine Schaltung, die betreibbar ist, um zu bestimmen, ob die Anweisung einen Zugriff auf ein Architekturregister beinhaltet;
eine Schaltung, die, wenn die Anweisung einen Zugriff auf das Architekturregister beinhaltet, betreibbar ist, um basierend auf einem gespeicherten Zustand des Architekturregisters zu bestimmen, ob das Architekturregister in ein einzelnes physisches Register gepackt ist; und
eine Schaltung, die, wenn das Architekturregister nicht in das einzelne physische Register gepackt ist, betreibbar ist, um eine Aktion durchzuführen, die das Architekturregister in das einzelne physische Register packt;
wobei die Aktion das Injizieren von mindestens einer uop in den Puffer zur Ausführung vor den uops der Anweisung beinhaltet, wobei die mindestens eine injizierte uop auf dem gespeicherten Zustand des Architekturregisters basiert und mindestens einige Bits des Architekturregisters in einem zweiten Register speichert.

13. Vorrichtung nach Anspruch 12, wobei die Aktion mindestens eines von dem Injizieren von mindestens einer uop, dem Ändern des Zustands oder dem Ausrichten eines niedrigstwertigen Bits (LSB) des Architekturregisters mit einem LSB eines physischen Registers beinhaltet.

14. Vorrichtung nach Anspruch 12, ferner umfassend:
eine Schaltung, die mindestens eine der Aktionen und mindestens eine nachfolgenden Aktion, das Packen des Architekturregisters und mindestens ein nachfolgendes Packen des Architekturregisters oder den Zustand und mindestens einen nachfolgenden Zustand des Architekturregisters verfolgt, um eine Historie zu erstellen; und
eine Schaltung, die basierend auf der Historie bestimmt, ob eine zukünftige Aktion erforderlich ist oder welche zukünftige Aktion erforderlich ist.

15. Vorrichtung nach Anspruch 12, wobei der Zustand mindestens eines davon angibt, ob das Architekturregister in dem einzelnen physischen Register gespeichert ist, ob das Architekturregister in mehr als einem physischen Register gespeichert ist oder einer Reihenfolge, in der das Architekturregister innerhalb mindestens eines physischen Registers angeordnet ist.

## Revendications

1. Procédé d'accès à des données stockées dans un registre architectural compacté dans au moins un registre physique d'une mémoire physique, le procédé comprenant :
le décodage d'une instruction ;
le stockage d'au moins une micro-opération (uop) décodée à partir de l'instruction dans un tampon pour exécution ;
le fait de déterminer si l'instruction comporte un accès à un registre architectural ;
si l'instruction comporte un accès au registre architectural, le fait de déterminer, sur la base d'un état stocké du registre architectural, si le registre architectural est compacté dans un registre physique unique ; et
si le registre architectural n'est pas compacté dans le registre physique unique, la réalisation d'une action qui compacte le registre architectural dans le registre physique unique ;
dans lequel l'action comporte l'injection d'au moins une uop dans le tampon pour exécution avant les uops de l'instruction, dans lequel l'au moins une uop injectée est basée sur l'état stocké du registre architectural et stocke au moins certains bits du registre architectural dans un second registre.

2. Procédé selon la revendication 1, dans lequel l'action comporte au moins une action parmi l'injection d'au moins une uop, le changement d'état ou l'alignement d'un bit le moins significatif (LSB) du registre architectural avec un LSB d'un registre physique.

3. Procédé selon la revendication 1, dans lequel l'accès comporte une opération de lecture ou une opération d'écriture, et l'action permet au registre architectural d'être lu ou écrit à partir du registre physique unique.

4. Procédé selon la revendication 1, dans lequel des bits du registre architectural sont stockés dans au moins un registre physique d'un fichier de registre physique.

5. Procédé selon la revendication 1, comprenant en outre :
le suivi d'au moins l'un parmi l'action et au moins une action ultérieure, le compactage du registre architectural et au moins un compactage ultérieur du registre architectural, ou l'état et au moins un état ultérieur du registre architectural, pour créer un historique, et le fait de déterminer si une action future est requise ou l'action future requise sur la base de l'historique.

6. Procédé selon la revendication 4, dans lequel l'action comporte l'injection d'au moins une uop qui stocke au moins une partie des bits du registre architectural dans un second registre physique avant l'accès.

7. Procédé selon la revendication 1, dans lequel l'état indique au moins un parmi le fait de savoir si le registre architectural est stocké dans un registre physique unique, si le registre architectural est stocké dans plus d'un registre physique, ou un ordre dans lequel le registre architectural est disposé dans au moins un registre physique.

8. Procédé selon la revendication 1, dans lequel une pluralité de noms de registre logique (LRN) sont chacun associés au registre architectural, et dans lequel chaque LRN est mappé à un nom de registre physique (PRN) associé à un registre physique.

9. Procédé selon la revendication 1, dans lequel le registre architectural est accessible à partir d'un registre physique unique si un bit le moins significatif (LSB) du registre est aligné avec un LSB d'un registre physique.

10. Procédé selon la revendication 1, dans lequel le registre architectural est accessible à partir du registre physique unique si le registre est accessible par l'instruction sans déplacer des bits du registre architectural avant d'accéder aux bits.

11. Procédé selon la revendication 1, dans lequel après une écriture dans le registre architectural, un registre architectural plus grand compacté dans le registre physique est lisible.

12. Dispositif d'accès à des données stockées dans un registre architectural compacté dans au moins un registre physique d'une mémoire physique, le dispositif comprenant :
un circuit utilisable pour décoder une instruction ;
un circuit utilisable pour stocker au moins une micro-opération (uop) décodée à partir de l'instruction dans un tampon pour exécution ;
un circuit utilisable pour déterminer si l'instruction comporte un accès à un registre architectural ;
un circuit utilisable, si l'instruction comporte un accès au registre architectural, pour déterminer, sur la base d'un état stocké du registre architectural, si le registre architectural est compacté dans un registre physique unique ; et
un circuit utilisable, si le registre n'est pas compacté dans le registre physique unique, pour effectuer une action qui compacte le registre architectural dans le registre physique unique ;
dans lequel l'action comporte l'injection d'au moins une uop dans le tampon pour exécution avant les uops de l'instruction, dans lequel l'au moins une uop injectée est basée sur l'état stocké du registre architectural et stocke au moins certains bits du registre architectural dans un second registre.

13. Dispositif selon la revendication 12, dans lequel l'action comporte au moins une action parmi l'injection d'au moins une uop, le changement d'état ou l'alignement d'un bit le moins significatif (LSB) du registre architectural avec un LSB d'un registre physique.

14. Dispositif selon la revendication 12, comprenant en outre :
un circuit qui suit au moins l'un parmi l'action et au moins une action ultérieure, le compactage du registre architectural et au moins un compactage ultérieur du registre architectural, ou l'état et au moins un état ultérieur du registre architectural, pour créer un historique ; et
un circuit qui détermine si une action future est requise ou l'action future requise sur la base de l'historique.

15. Dispositif selon la revendication 12, dans lequel l'état indique au moins un parmi le fait de savoir si le registre architectural est stocké dans le registre physique unique, si le registre architectural est stocké dans plus d'un registre physique, ou un ordre dans lequel le registre architectural est disposé dans au moins un registre physique.
